# EUROPÄISCHE PATENTSCHRIFT

(11) **EP 0 610 699 B1**
(45) Veröffentlichungstag und Bekanntmachung des Hinweises auf die Patenterteilung: **18.12.1996**
(21) Anmeldenummer: 94100854.2
(22) Anmeldetag: 21.01.1994
(51) Int. Cl.: C08F 222/20, C08F 222/40, C04B 24/26

(54) **Copolymere auf Basis von Maleinsäurederivaten und Vinylmonomeren, deren Herstellung und Verwendung**
Copolymers based on maleic acid derivatives and vinyl monomers, their preparation and their use
Copolymères à base de dérivés de l'acide maléique et monomères vinyliques, leur préparation et leur usage

(30) Priorität: 01.02.1993 AT 162/93
(43) Veröffentlichungstag der Anmeldung: 17.08.1994
(73) Patentinhaber: DSM Chemie Linz GmbH, 4021 Linz (AT); Holderchem Holding AG, CH-1700 Fribourg (CH)
(72) Erfinder: Albrecht, Gerhard, Dr., A-4060 Leonding (AT); Leitner, Hubert, A-8967 Haus/Ennstal (AT); Lindenberger, Rudolf, A-4400 Steyr (AT); Siedl, Richard, A-4481 Asten (AT); Werenka, Christian, A-4052 Ansfelden (AT); Suter, Willi, CH-3400 Burgdorf (CH)
(74) Vertreter: Kunz, Ekkehard, Dr.

(56) Entgegenhaltungen:
- EP-A- 0 402 563
- DE-A- 4 142 388
- GB-A- 1 004 055

## Beschreibung

Die Erfindung betrifft Copolymere auf Basis von Maleinsäurederivaten und Vinylmonomeren, deren Herstellung und Verwendung sowie Bindemittelmischungen und Baustoffe mit einem Gehalt an den Copolymeren.

Copolymere auf Basis von Maleinsäureanhydrid sind beispielsweise aus der DE-A-33 44 470 oder DE-A-38 09 964 bekannt und werden u. a. auch als Zusatzmittel für hydraulische Bindemittel, z. B. Zemente, Anhydrit oder Gips, verwendet, in denen sie insbesondere die Fließfähigkeit während der Verarbeitung erhöhen bzw. die mechanischen Eigenschaften des erhärteten Baustoffes verbessern. Besonders gute Fließeigenschaften besitzen Zusatzmittel auf Basis von Naphthalinsulfonsäure-Formaldehyd-Kondensaten, wie sie in der EP-A-214 412 beschrieben sind. Diese als Verflüssiger, Superverflüssiger, Fließmittel, Dispergiermittel oder Wasserreduziermittel bezeichneten Zusatzmittel haben jedoch den Nachteil, daß die Fließfähigkeit der Bindemittelmischung nicht über eine ausreichend lange Zeitspanne aufrechterhalten werden kann. Da eine zunehmende Menge Beton als vorgemischter oder Transportbeton an die Baustelle geliefert wird, stellt dieser Verlust der Verarbeitbarkeit ("slump loss") in einem relativ kurzen Zeitraum ein dringend zu lösendes Problem dar.

Aus der EP-A-402.563 und DE-A-41 42 388 sind Superverflüssiger auf Basis von Maleinsäurederivaten bzw. aus der DE-A-42 17 181 auf Basis von Melamin und Glyoxylsäure bekannt, die bereits eine gewisse Regelung des Fließverhaltens von Zementmischungen erlauben. Allerdings sind die Eigenschaften dieser Zementmischungen für erhöhte Anforderungen in der Praxis nicht ausreichend. Auch sind die eingesetzten Ausgangssubstanzen zum Teil nur aufwendig herstellbar.

Auf dem Gebiet der Bindemittelverflüssiger und Dispergiermittel für Feststoffsuspensionen stellte sich demnach weiterhin die Aufgabe, verbesserte Zusatzmittel zu finden, die eine optimale Eigenschaftskombination, insbesondere im Hinblick auf die Fließ- und Abbindeeigenschaften, sowie im Hinblick auf die Aufrechterhaltung ihrer Wirksamkeit auch bei längerer Lagerung in Form ihrer wäßrigen Zubereitungen, ergeben, d. h. insbesondere eine gute dispergierende und verflüssigende Wirkung für die Bindemittelsuspensionen ergeben, eine optimale und praxisgerechte Regelung des Verarbeitungszeitraumes ermöglichen und trotzdem den Abbindevorgang nicht zu stark verzögern.

Es wurde gefunden, daß neue Copolymere mit spezieller Zusammensetzung auf Basis von Maleinsäure-, Maleinsäureester-, Maleinsäureamid- bzw. Maleinsäureimidderivaten und Vinylpolymeren diese Nachteile nicht aufweisen und als Zusatzmittel zu Bindemitteln die gewünschten positiven Eigenschaften ergeben.

Gegenstand der Erfindung sind demnach Copolymere, mit einem mittleren Molekulargewicht von 1000 bis 100 000 g/mol, die im wesentlichen aus den Strukturelementen 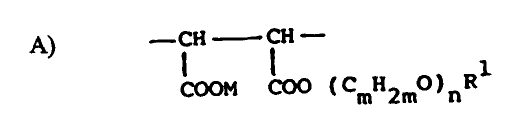 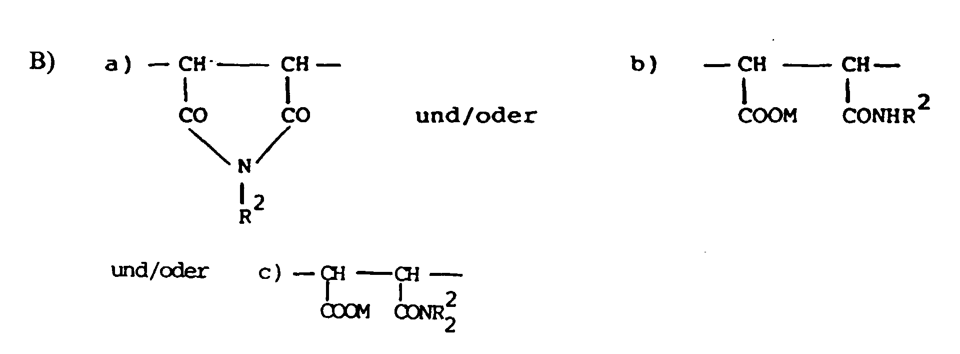 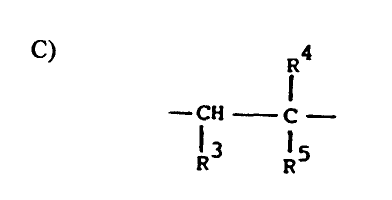 sowie gegebenenfalls 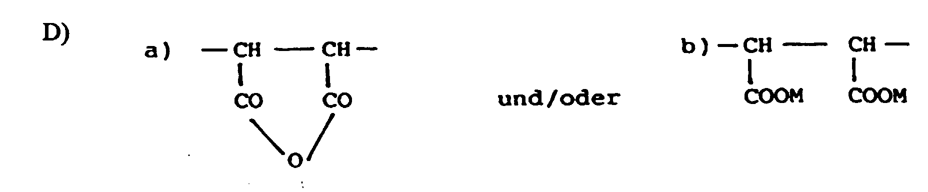 aufgebaut sind, wobei
- M:: H oder ein Kation wie z. B. Alkali- oder Erdalkalimetall, eine Ammoniumgruppe oder den Rest einer organischen Aminogruppe,
- R¹:: C₁- bis C₂₀-Alkyl-, C₅- bis C₈-Cycloalkyl- oder Arylrest
- R²:: H, C₁- bis C₂₀-Alkyl- oder Hydroxyalkyl, C₅- bis C₈- Cycloalkyl- oder Arylrest, in welchem 1 oder mehrere H-Atome durch die Strukturelemente - COOM,SO₃M und/oder PO₃M₂ substituiert sein können, sowie sich gegebenenfalls wiederholende Struktureinheiten der allgemeinen Formel (CₘH₂ₘO)ₙ R¹,
- R³:: H, Methyl- oder Methylengruppe, die gegebenenfalls substituiert sein kann und unter Einbeziehung von R⁵ einen 5- bis 8-gliedrigen Ring bzw. einen Indenring bildet,
- R⁴:: H, Methyl- oder Ethylgruppe,
- R⁵:: H, C₁ - C₂₀-Alkyl-, C₅-C₈-Cycloalkyl- oder Arylrest, der gegebenenfalls substitutiert sein kann, Alkoxycarbonylgruppe, Alkoxygruppe, Alkyl- oder Arylcuboxylatgruppe, Carboxylatgruppe, Hydroxyalkoxycarbonylgruppe,
- m:: eine ganze Zahl von 2 bis 4,
- n:: eine ganze Zahl von 0 - 100, bevorzugt von 1 - 20 bedeuten.

Als Reste M von organischen Aminogruppen sind beispielsweise Mono-, Di- oder Tri-alkyl- oder -alkanolamine mit 1 bis 8 C-Atomen möglich.
Die Strukturelemente A, Ba, Bb, Bc, C und D können jeweils einheitliche Zusammensetzungen darstellen, sie können aber auch als Gemische verschiedener Zusammensetzungen vorliegen. Das gewichtsmittlere Molekulargewicht der erfindungsgemäßen Copolymere liegt bevorzugt bei etwa 2000 bis 50 000 g/Mol.

Bevorzugt liegen in den erfindungsgemäßen Copolymeren die Strukturelemente A in einer Menge von etwa 1 bis 85, besonders bevorzugt 20 bis 55 Mol%, die Strukturelemente B in einer Menge von etwa 1 bis 85, besonders bevorzugt 2 bis 25 Mol%, die Strukturelemente C in einer Menge von etwa 1 bis 90, besonders bevorzugt 40 bis 60 Mol% und die Strukturelemente D in einer Menge von 0 bis 50, besonders bevorzugt 1 bis 10 Mol% vor. Besonders günstig erweist sich eine Zusammensetzung von 35 bis 40 Mol% der Strukturelemente A, 5 bis 10 Mol% der Strukturelemente B, 50 Mol% der Strukturelemente C und 2 bis 5 Mol% der Strukturelemente D. Ein besonders vorteilhaftes molares Verhältnis der Struktureinheiten (A + B + D) : C liegt im erfindungsgemäßen Copolymer bei 1 : 1.

Die Ausgangsprodukte, die die Strukturelemente C und D im Copolymer bilden, werden erfindungsgemäß in Form der entsprechenden Monomere G und H eingesetzt.

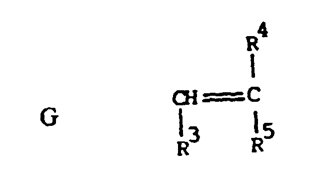

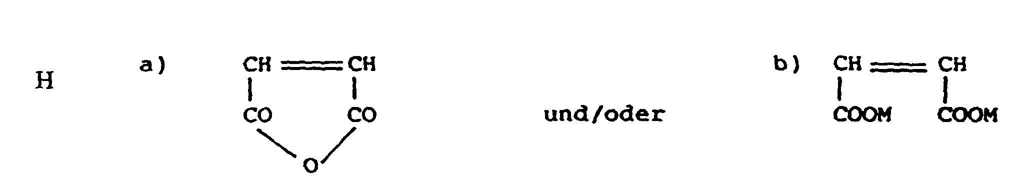

Dagegen können die Strukturelemente A und B entweder in Form der vorgebildeten Einheiten E oder F eingesetzt werden, 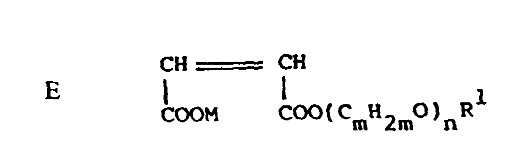 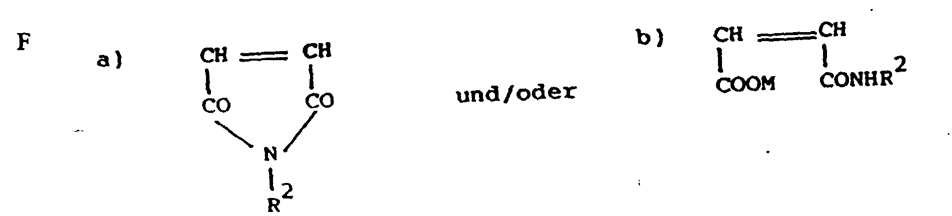 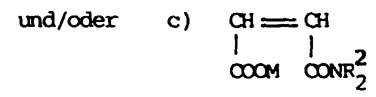 oder aber sie werden während bzw. nach der Polymerisation durch eine polymeranaloge Umsetzung gebildet. Strukturelement A setzt sich aus monoveresterten Dicarbonsäurestrukturen zusammen, wobei M vorzugsweise Wasserstoff oder Natrium, m vorzugsweise 2, n vorzugsweise 5 bis 20 und R¹ bevorzugt eine lineare oder verzweigte Alkylgruppe mit 1 bis 3 Kohlenstoffatomen darstellt. Besonders bevorzugt sind monoveresterte Maleinsäureanhydrideinheiten mit Monomethoxypolyethylenglykol oder Monomethoxypolyethylen-block-propylenglykol des mittleren Molekulargewichtes von 250 g/Mol (n = 5) bis 750 g/Mol (n = 17).

Im Copolymerisat verbleibende Anhydrideinheiten werden durch das Strukturelement D wiedergegeben, welches erfindungsgemäß entweder als Anhydridring Da) oder in hydrolysierter Form Db) vorliegen kann, wobei M vorzugsweise Wasserstoff oder Natrium darstellt.

Die Struktureinheit B liegt gemäß Formel Ba) als 5-gliedriger, vorzugsweise N-substituierter Imidring vor, der bereits durch die Struktur der zur Herstellung des Copolymerisats eingesetzten Monomere vorgegeben sein kann oder im Verlauf des erfindungsgemäßen Verfahrens durch Umsetzung von primäre Aminogruppen tragenden Verbindungen mit der Anhydridgruppe des Maleinsäureanhydrids erzeugt wird. R² ist dabei vorzugsweise eine lineare oder verzweigte C₄- bis C₁₂-Alkylgruppe, ein Cyclohexylring, eine gegebenenfalls substituierte Phenyl- oder Naphthylgruppe oder ein lineares oder verzweigtes, endständig verschlossenes Polyoxyalkylenglykol der allgemeinen Formel (CₘH₂ₘO)ₙR¹ mit m = 2 - 4, n = 0 - 100 und R¹ = C₁ - C₂₀-Alkyl, C₅ - C₈-Cycloalkyl oder Aryl. Besonders bevorzugt sind R²-Reste, die hydrophile Gruppen, insbesondere Sulfonsäuregruppen tragen. Als Beispiele für die Strukturelementgruppe B liefernde vorgebildete Monomere seien genannt: N-Phenylmaleimid, N-(2,6-Dimethylphenyl)-maleimid, N-Hydroxyethylmaleimid, N-(4-Sulfophenyl)-maleimid. Beispiele für Verbindungen, welche im Verlauf des erfindungsgemäßen Verfahrens durch Reaktion mit den Anhydrideinheiten das Strukturelement C bilden sind: Cyclohexylamin, 2-Ethylhexylamin, n-Laurylamin, Glutaminsäure, Glycin, Morpholin, Sulfanilsäure, Taurin, Aminonaphthalinsulfonsäure, Aminonaphthalindisulfonsäure, Aminoethanphosphonsäure und Phosphanilsäure. Die Struktureinheit B kann gemäß Formel Bb und Bc auch in Form des entsprechenden Halbamids vorliegen.

Bei den Monomeren G, die das Strukturelement C ergeben, handelt es sich vorzugsweise um solche Verbindungen, die eine hohe Tendenz zur Copolymerisation mit Maleinsäureanhydrid aufweisen. Beispiele für solche Monomere sind: Ethylen, Propylen, n-Butylen, Isobutylen, Diisobutylen, Cyclohexen, Styrol, alpha-Methylstyrol, Inden, 4-Methoxystyrol, 4-Methylstyrol, Vinylacetat, Vinylpropionat, Methylvinylether, Ethylvinylether, Isobutylvinylether, Tetrahydrophthalsäureanhydrid, n-Butylacrylat, Methylmethacrylat, Hydroxymethylmethacrylat oder Methacrylsäure.

Diese Monomere bzw. Strukturelemente können gegebenenfalls auch als Gemisch miteinander oder mit anderen Monomeren eingesetzt werden.

Ein weiterer Gegenstand der Erfindung ist ein Verfahren zur Herstellung der durch die Struktureinheiten A bis D charakterisierten Copolymere unter Verzicht auf die sonst üblichen organischen Lösungsmittel, wobei die Copolymere in einem einfach zu führenden Verfahren mit hohen Ausbeuten erhalten werden. Zur Herstellung der Copolymere wird
a) ein Maleinsäurehalbester gemäß Formel E) oder ein Gemisch aus einem Polyalkylenglykolmonoether und Maleinsäureanhydrid, welches bei etwa 100 bis 140°C unter Einsatz eines Veresterungskatalysators ebenfalls zum Maleinsäurehalbester gemäß Formel E reagiert, oder ein Gemisch aus Maleinsäurehalbester, Polyalkylenglycolmonoether und Maleinsäureanhydrid vorgelegt,
b) die Monomerbestandteile gemäß Formel F bzw. deren Ausgangssubstanzen, G und gegebenenfalls H, sowie gegebenenfalls weiterer Polyalkylenglykolmonoether, sowie gegebenenfalls übliche Polymerisationshilfsmitteln bei etwa 40 bis 120°C unter Rühren zugesetzt,
c) das Gemisch bei 40 bis 150°C zur Vervollständigung der Polymerisationsreaktion und polymeranalogen Umsetzung weiter gerührt und
d) die Reaktionsmischung nach Abkühlen auf etwa 50 bis 80°C üblicherweise mit einer Base neutralisiert und mit Wasser auf die gewünschte Konzentration verdünnt.

Als Reaktionsmedium kann erfindungsgemäß entweder der zum Aufbau der Teilstruktur A erforderliche Polyalkylenglykolmonoether oder der in einer vorgelagerten Reaktion aus Maleinsäureanhydrid und dem Polyalkylenglykolmonoether erzeugte makromere Maleinsäurehalbester bzw. ein Gemisch aus beiden dienen. Die Erzeugung des Halbesters erfolgt vorzugsweise bei 120°C - 140°C über einen Zeitraum von 2 bis 4 Stunden unter Einsatz von vorzugsweise 0,5 bis 1,0 Gew.% eines Veresterungskatalysators, wie z. B. Schwefelsäure oder Toluolsulfonsäure. Als Reaktionsmedium kann erfindungsgemäß auch ein zum Aufbau der Teilstruktur B erforderliches lineares oder verzweigtes Alkoxypolyalkylenglykolamin bzw. ein Gemisch aus Polyalkylenglykolmonoether und Polyalkylenglykolaminmonoether dienen.

Zur Verknüpfung der Struktureinheiten A bis D wird bevorzugt so verfahren, daß der Polyalkylenglykolmonoether vollständig oder teilweise vorgelegt wird und mit der gesamten oder einer Teilmenge von Maleinsäureanhydrid vermischt wird. Nach Beendigung der gegebenenfalls durchgeführten Vorreaktion unter den oben genannten Bedingungen wird die Polymerisationstemperatur eingestellt und die Copolymerisation durch Zugabe der die Struktureinheiten C bildenden Monomere, die gegebenenfalls den Polymerisationsinitiator in gelöster Form enthalten können, durchgeführt. Dieser Monomerzulauf kann jedoch auch die die Struktureinheit B liefernden Monomere in dem Fall enthalten, daß sie miteinander mischbar sind. Das Verfahren kann jedoch auch mit 2 separaten Monomerzuläufen erfolgen, insbesondere dann, wenn die polymeranaloge Bildung des Strukturelementes B infolge Unlöslichkeit der Aminoverbindung im Polymerisat nicht möglich ist, wie z. B. bei Verwendung von Sulfanilsäure.

Als Polymerisationshilfsmittel kommen übliche Additive, wie sie dem Fachmann in der Polymerisationstechnik bekannt sind, in Frage. Insbesondere handelt es sich dabei um Polymerisationsinitiatoren, wie z. B. Azo-bis-isobutyronitril, Azo-bis-2-methylvaleronitril, Dibenzoylperoxid, Lauroylperoxid, Dicylohexylperoxodicarbonat, tert. Butylperoxy-2-ethylhexanoat und tert. Butylperbenzoat, sowie um Polymerisationsbeschleuniger oder Aktivatoren, wie z. B. Na-Bisulfit, Ascorbinsäure oder Salze von Schwermetallen, oder um Molekulargewichtsregler, wie z. B. n-Dodecylmercaptan, tert. Dodecylmercaptan oder Diisopropylxanthogendisulfit.

Die Polymerisationen werden vorzugsweise bei Temperaturen von etwa 40 bis 120, besonders bevorzugt von 60 bis 100°C durchgeführt. Die Temperaturen für die Nachreaktion zur Vervollständigung von Ester-, Halbamid- und/oder Imidbildung liegen vorzugsweise bei 100 bis 150°C.

Bei einem besonders bevorzugten Verfahren zur Herstellung der erfindungsgemäßen Copolymere wird
a) ein Polyalkylenglykolmonoether und ein molarer Unterschuß von Maleinsäureanhydrid vorgelegt,
b) als Monomerbestandteil F ein Gemisch aus einer Lösung des entsprechenden Amins in Polyalkylenglykolmonoether, dem unter Rühren Maleinsäureanhydrid zugesetzt wird, eingesetzt und daß der Monomerenbestandteil gemäß Formel G gegebenenfalls aus einem separaten Zulaufgefäß dem vorgelegten Gemisch gemäß a) zudosiert.

Dabei wird eine Teilmenge des zur Bildung des Strukturelementes A erforderlichen Polyalkylenglykolmonoethers zusammen mit einem Maleinsäureanhydridunterschuß vorgelegt. Das zum Aufbau der Struktureinheit B benötigte aminogruppenhaltige Monomere, besonders bevorzugt ist N-(4-Sulfophenyl)-maleinsäuremonoamid, wird in einem rührbaren Zulaufgefäß durch Auflösen von 4-Sulfanilsäure, bevorzugt als Salz, in der restlichen Polyglykolmenge und anschließendem Zusatz von Maleinsäureanhydrid unter Rühren gebildet. Die zur Polymerisation erforderliche Initiatormenge wird anschließend ebenfalls in diesem Gemisch aufgelöst. Nachdem die Reaktorvorlage auf die Polymerisationstemperatur gebracht wurde, wird mit der Zugabe des Gemisches begonnen. Gleichzeitig wird die Zugabe des die Struktureinheit C bildenden Monomeren bzw. Monomerengemisches aus einem separaten Zulaufgefäßes gestartet und die Polymerisation durchgeführt. Nach Beendigung der Polymerisation wird die polymeranaloge Veresterung und Amid- bzw. Imid-Bildung bei erhöhter Temperatur vervollständigt.
Bei der Polymerisation entsteht eine viskose Reaktionsmasse, die jedoch sehr gut rührbar ist und nach dem Abkühlen auf 50 - 80°C üblicherweise mit Wasser verdünnt und durch Zugabe von Lauge neutralisiert wird.

Das erfindungsgemäße Verfahren zeichnet sich vor allem durch hohe Ausbeuten, geringe Restmonomeranteile im Endprodukt, sowie durch seine Einfachheit, Umweltfreundlichkeit und sicherheitstechnische Unbedenklichkeit aus.
Alle eingesetzten Ausgangsstoffe sind Bestandteil des Endproduktes, welches daher frei von unerwünschten Lösungsmittelresten ist. Der Polyalkylenglykolmonoether dient zunächst als Reaktionsmedium für die Bildung bestimmter Monomere, wie z. B. Sulfophenylmaleinsäuremonoamid, später als Polymerisationsmedium mit einer positiven Wirkung auf die Wärmeabführung und Rührbarkeit des Polymerisats und wird schließlich über die freie OH-Gruppe als Bestandteil in das Copolymerisat selbst eingebaut. Im Gegensatz zu bekannten Verfahren, bei denen die Erzeugung von Carbonsäureimidstrukturen mit Sulfonsäuregruppen tragenden Substituenten in Polymeren polymeranalog nur in wäßriger Lösung unter Druck erfolgen kann und unvollständig ist, gelingt die Reaktion mit Hilfe des erfindungsgemäßen Verfahrens drucklos und in hohen Ausbeuten.

Die erfindungsgemäßen Copolymerisate eignen sich als Zusatz für wäßrige Aufschlämmungen von pulverförmigen Substanzen wie z. B. Tonen, Porzellanschlicker, Silikatmehl, Kreide, Ruß, Gesteinsmehl, Pigmenten, Talkum und Kunststoffpulvern, insbesondere aber von hydraulischen Bindemitteln, wie Portlandzement, Hochofenzement, Traß- und Flugaschenzement, Tonerdezement, Magnesiazement, Anhydrit und Gips, in denen sie insbesondere als Dispergiermittel dienen. Die Verwendung der Copolymere als Zusatzmittel zu hydraulischen Bindemitteln wie z. B. Portlandzement, Hochofenzement, Traß- und Flugaschezement, Anhydrit, Gips, ist weiters bevorzugt. Die erfindungsgemäßen Copolymere können den hydraulischen Bindemitteln auch als Mahlhilfsmittel zur Verbesserung der Mahleigenschaften zugesetzt werden, wodurch sich der Mahlvorgang effizienter gestaltet.

Die erfindungsgemäßen Copolymere können in Form ihrer wäßrigen Lösungen oder in wasserfreier Form direkt den Zementmischungen wie Zementpasten, Mörtel oder Beton in einer Menge von etwa 0,01 bis 10 %, bevorzugt 0,05 bis 3 % Feststoff, bezogen auf das Gewicht des Zementes, zugesetzt werden. Sie zeigen im Vergleich zu bekannten Zusatzmitteln eine deutlich höhere Dispergierleistung, verbesserte Fließeigenschaften, verbesserte Abbindeeigenschaften, sind frei von Formaldehyd und können die Fließfähigkeit der Bindemittelmischungen über einen längeren Zeitraum aufrecht erhalten. Dadurch kann mit Hilfe der erfindungsgemäßen Copolymere die Verarbeitbarkeitsdauer der Bindemittelmischungen aufgrund des reduzierten "slump loss" verlängert werden. Gleichzeitig aber wird der Abbindevorgang zum fertigen Baustoff nur geringfügig verzögert. Ein weiterer entscheidender Vorteil der erfindungsgemäßen Polymerisate liegt darin, daß sie ihre hohe Ausgangsdispergierleistung auch dann nicht verlieren, wenn sie über längere Zeit in Form ihrer wäßrigen Zubereitungen gelagert werden.

Ein weiterer Gegenstand der Erfindung sind Bindemittelmischungen, die hydraulische Bindemittel und die erfindungsgemäßen Copolymere, sowie gegebenenfalls Wasser, übliche Zuschlagstoffe und Additive enthalten, sowie ein Baustoff auf Basis dieser Bindemittelmischungen.

### A) Herstellungsbeispiele

### Beispiel 1:

In einem Reaktionsgefäß mit Thermometer, Rührer, Gaseinleitungsrohr, RückflußküHer und 2 Anschlüssen für separate Zuläufe, wurden 282 g Methoxypolyethylenglykol (Fa. Hoechst) mit einem mittleren Molekulargewicht (M) von 500 g/Mol (0,564 Mol) vorgelegt und mit 6,1 g Maleinsäureanhydrid (0,062 Mol) unter Rühren vermischt. Die eingeschlossene Luft wurde durch Stickstoff ersetzt und der Kolbeninhalt auf 95°C erwärmt.

Gleichzeitig wurde in einem separaten rührbaren Zulaufgefäß (Zulauf 1) unter Stickstoff eine Lösung aus 282 Methoxypolyethylenglykol (M = 500 g/Mol, 0,564 Mol) und 43,5 g 4-Sulfanilsäure-Natriumsalzdihydrat (0,188 Mol) bereitet, in welche 122,8 g Maleinsäureanhydrid (1,253 Mol) unter Rühren eingetragen wurden. Hierbei bildete sich sofort unter intensiver Gelbfärbung N-(4-Sulfophenyl)-maleinsäure-monoamid, wozu 15 Mol% der eingesetzten Maleinsäureanhydridmenge benötigt wurden. Anschließend wurden 5,5 g Azo-bis-isobutyronitril (0,0335 Mol) unter Rühren zugesetzt und solange gerührt, bis eine vollständig klare Lösung entstand. Nachdem im Polymerisationsgefäß die Reaktionstemperatur von 95°C erreicht war, wurde die im Zulaufgefäß 1 bereitete Monomerlösung sowie 137,1 g Styrol (1,318 Mol) aus einem zweiten Zulaufgefäß (Zulauf 2) kontinuierlich und simultan über einen Zeitraum von 2 Stunden in den Reaktor dosiert. Nach Beendigung der Zugabe wurde noch 2 h bei 95°C gerührt, anschließend auf 140°C erhitzt und 2 Stunden zur Vervollständigung der Veresterung und Imidbildung gerührt. Die klare, orange gefärbte Polymerschmelze wurde unter weiterem Rühren auf 50°C abgekühlt und durch Zugabe von 1300 g destilliertem Wasser verdünnt. Abschließend wurde durch Zugabe von 174 g einer wäßrigen 20 %igen Natronlauge und weiteren 180 g destilliertem Wasser ein pH-Wert von 6,95 und ein Feststoffgehalt von 36 Gew.% eingestellt. Es wurde eine klare gelborange gefärbte Lösung erhalten mit einem Gehalt von 0,39 Gew.% an freiem Styrol und einem freien Maleinsäureanteil von 0,17 Gew.%. (Bestimmung mittels HPLC).
Das gewichtsmittlere Molekulargewicht, welches durch Gelpermationschromatographie unter Verwendung von Polyacrylsäure als Standard ermittelt wurde, lag bei 22.000 g/Mol.

### Beispiel 2:

Es wurde analog zu Beispiel 1 verfahren, jedoch mit dem Unterschied, daß die Zuläufe folgende Bestandteile enthielten:

| | | |
|---|---|---|
| Zulauf 1: | 282,0 g | Methoxypolyethylenglykol (M=500; 0,564 Mol) |
| | 110,0 g | Maleinsäureanhydrid (1,122 Mol) |
| | 3,1 g | n-Dodecylmercaptan |
| | 5,5 g | Azo-bis-isobutyronitril (0,0335 Mol) |
| | | |
| Zulauf 2: | 125,5 g | Styrol (1,207 Mol) |
| | 22,7 g | N-Phenylmaleimid (0,131 Mol) |

Nach Verdünnung und Neutralisation der rotbraun gefärbten Polymerschmelze wurde eine klare, gelblich gefärbte Lösung erhalten, mit einem Feststoffgehalt von 33,9 Gew.%, 0,06 Gew.% nichtumgesetztem Styrol, 0,02 Gew.% freier Maleinsäure und einem durchschnittlichen Molekulargewicht des Copolymerisates von 11.000 g/mol.

### Beispiel 3:

Die Umsetzung gemäß den Beispielen 1 und 2 wurde wiederholt, jedoch wurde anstelle von N-Phenylmaleimid (Beispiel 2) N-(2,6-Dimethylphenyl)-maleimid in einer Menge von 26,3 g (0,131 Mol), gelöst in 125,5 g Styrol, eingesetzt. Das als klare, gelbe wäßrige Lösung vorliegende Endprodukt enthielt 34,4 Gew.% Feststoff, 0,41 Gew.% freies Styrol und 0,17 Gew.% freie Maleinsäure. Das mittlere Molekulargewicht betrug 9000 g/Mol.

### Beispiel 4:

Beispiel 1 wurde wiederholt, jedoch mit dem Unterschied, daß das im Zulaufgefäß 1 enthaltene N(4-Sulfophenyl)-maleinsäuremonoamid als vorgebildetes Monomer in Form des Mononatriumsalzes in einer Menge von 35,7 g (0,122 Mol) eingesetzt wurde. Es wurde eine klare, gelborange gefärbte wäßrige Copolymerisatlösung mit einem Feststoffgehalt von 36,0 Gew.%, 0,2 Gew.% Styrol, 0,07Gew. % Maleinsäure und einem durchschnittlichen Molekulargewicht von 16.000 g/Mol erhalten.

### Beispiel 5:

Die Copolymerisation wurde analog zu Beispiel 1 mit folgenden Mengen und Zusammensetzungen der Zuläufe wiederholt:

| | | |
|---|---|---|
| Zulauf 1: | 282,0 g | Methoxypolyethylenglykol (M=500; 0,564 Mol) |
| | 122,8 g | Maleinsäureanhydrid (1,253 Mol) |
| | 33,1 g | 5-Amino-2-naphthalinsulfonsäurenatriumsalz (0,125 Mol) |
| | 5,5 g | Azo-bis-isobutyronitril (0,0335 Mol) |
| | | |
| Zulauf 2: | 137,1 g | Styrol (1,318 Mol) |

Die klare tiefbraun gefärbte Polymerlösung mit einem Feststoffanteil von 35,9 Gew.% enthielt 0,22 Gew.% freies Styrol und 0,10 Gew% freie Maleinsäure bei einem durchschnittlichen Molekulargewicht von 17.500 g/mol.

### Beispiel 6:

Anstelle 5-Amino-2-naphthalinsulfonsäure-Na wie gemäß Beispiel 5, wurden in Beispiel 6 43,6 g 1-Amino-3,6-naphthalindisulfonsäuredinatriumsalz (0,125 Mol) eingesetzt. Die schwarzbraune, klare Polymerisatlösung enthielt 35,5 Gew.% Feststoff, 0,37 Gew.% Styrol, 0,21 Gew.% Maleinsäure und hatte ein mittleres Molekulargewicht von 19.500 g/Mol.

### Beispiel 7:

Im selben Reaktionsgefäß wie gemäß Beispiel 1, das jedoch nur einen Zulaufanschluß aufwies, wurden 600 g Methoxypolyethylenglykol (M= 500, 1,20 Mol) vorgelegt und 147 g Maleinsäureanhydrid (1,50 Mol) unter Rühren aufgelöst. Die eingeschlossene Luft wurde durch Spülen mit Stickstoff beseitigt und der Kolbeninhalt auf 95°C erwärmt. Anschließend wurden aus einem Zulaufgefäß 156 g Styrol (1,50 Mol), welches 6,45 g Azo-bis-isobutyronitril (0,0393 Mol) in gelöster Form enthielt, über einen Zeitraum von 2 Stunden gleichmäßig zudosiert und die Temperatur nach beendeter Zugabe noch weitere 2 Stunden bei 95°C gehalten. Anschließend wurde eine Mischung aus 11,1 g n-Butanol (0,15 Mol) und 14,9 g Cyclohexylamin (0,15 Mol) innerhalb von 10 Minuten zu der gerührten Reaktionsmasse gegeben und die Temperatur auf 140°C erhöht. Nach Erreichen dieser Temperatur wurde zur Vervollständigung der polymeranalogen Ester- und Imidbildung weitere 2 Stunden bei 140°C gerührt, wobei ein klares tieforange gefärbtes Polymerisat entstand, das nach Abkühlen auf 50°C mit 1000 g destilliertem Wasser verdünnt, bei Raumtemperatur mit 180 g 20%iger wäßriger Natronlauge auf einen pH-Wert von 7,01 und durch Zugabe weiterer 450 g Wasser auf einen Feststoffgehalt von 36,1 Gew.% eingestellt wurde. Der Anteil an nicht umgesetztem Styrol lag bei 0,58 Gew.%, die freie Maleinsäure bei 0,16 Gew.%. Das Copolymere hatte ein mittleres Molekulargewicht von 23.000 g/Mol.

### Beispiel 8:

Nach dem in Beispiel 7 beschriebenen Verfahren wurde mit dem Unterschied, daß anstelle von Cyclohexylamin, 2-Ethylhexylamin in einer Menge von 19,4 g (0,15 Mol) eingesetzt wurden, eine wäßrige Copolymerisatlösung erhalten, mit 35,7 Gew.% Feststoff, 0,22 Gew.% Styrol, 0,22 Gew.% Maleinsäure und M= 23.500 g/Mol.

### Beispiel 9:

Es wurde analog zu Beispiel 7 verfahren, jedoch mit folgenden Änderungen:

| | | |
|---|---|---|
| Vorlage: | 500,0 g Methoxypolyethylenglykol (1,00 Mol) | |
| | 147,0 g Maleinsäureanhydrid (1,50 Mol) | |
| | Der Inhalt der Vorlage wurde vor der Polymerisation 1 Stunde bei 130°C zur teilweisen Veresterung gerührt. | |
| | | |
| Zulauf: | 156,0 g | Styrol (1,50 Mol) |
| | 6,45 g | Azo-bis-isobutyronitril (0,0393 Mol) |
| | 3,6 g | n-Dodecylmercaptan |

Die Imidisierung im Anschluß an die Polymerisation wurde durch Zugabe von 24,5 g Cyclohexylamin (0,25 Mol) und 2-stündige Umsetzung bei 140°C durchgeführt. Die wäßrige Lösung des neutralisierten Copolymerisates mit einem Molekulargewicht von 2500 g/Mol war tiefrot gefärbt, enthielt 37,0 Gew.% Feststoff, 0,31 Gew.% freies Styrol und 0,03 Gew.% freie Maleinsäure.

### Beispiel 10:

Beispiel 9 wurde wiederholt, jedoch mit 32,3 g 2-Ethylhexylamin (0,25 Mol) anstelle von Cyclohexylamin. Nach der Aufarbeitung lag das Copolymerisat mit einem mittleren Molekulargewicht von 3000 g/Mol in Form seines Natriumsalzes in wäßriger Lösung mit einem Feststoffanteil von 38,0 Gew.% und Restmonomeranteilen von 0,28 Gew.% Styrol und 0,05 Gew.% Maleinsäure vor.

### Beispiel 11:

Beispiel 7 wurde wiederholt, jedoch mit folgenden Änderungen:

| | | |
|---|---|---|
| Vorlage: | 552 g | Methoxypolyethylenglykol (1,105 Mol) |
| | 167 g | Maleinsäureanhydrid (1,700 Mol) |
| | | |
| Zulauf: | 221 g | Styrol (2,125 Mol) |
| | 11,6 g | n-Dodecylmercaptan |
| | 9,7 g | Azo-bis-isobutyronitril |
| | 1,9 g | Azo-bis-cyclohexancarbonitril |

Die Polymerisation wurde bei 105°C durchgeführt bei einer Zulaufzeit von 60 Minuten. Im Anschluß an eine 2-stündige Nachreaktion bei 115°C wurden 56,5 g Di-2-methoxyethylamin (0,425 Mol) über 15 Min. zugesetzt und zur Vervollständigung von Ester- und Halbamidbildung noch 2 h bei 140°C gerührt. Das erhaltene Rohprodukt wurde durch Zugabe von Wasser und Ca(OH)₂ neutralisiert.

### Beispiel 12:

Es wurde analog zu Beispiel 11 verfahren, wobei jedoch 28,3g Di-2-methoxyethylamin (0,217 Mol) eingesetzt wurden.

### Beispiel 13:

Beispiel 7 wurde wiederholt, jedoch mit folgenden Änderungen.

| | | |
|---|---|---|
| Vorlage: | 600 g | Methoxypolyethylen-block-propylenglykol mit einer durchschnittlichen EO-Zahl von 10 und 3 PO-Einheiten (0,958 Mol) |
| | 125 g | Maleinsäureanhydrid (1,278 Mol) |
| | | |
| Zulauf: | 160 g | Styrol (1,534 Mol) |
| | 8,6 g | n-Dodecylmercaptan |
| | 7,1 g | Azo-bis-isobutyronitril |
| | 1,4 g | Azo-bis-cyclohexancarbonitril |

Die Polymerisation wurde bei 105°C durchgeführt. Die Zulaufzeit betrug 1 Stunde. Im Anschluß an eine 2-stündige Nachreaktionszeit bei 115°C wurden 17,0 g Di-2-methoxyethylamin (0,128 Mol) zugesetzt und weitere 2 h bei 140°C gerührt. Durch Zugabe von Wasser und Calciumhydroxid wurde eine 40 %ige Lösung des Polymerisats hergestellt.

### Beispiel 14:

Beispiel 7 wurde wiederholt, jedoch mit folgenden Änderungen:

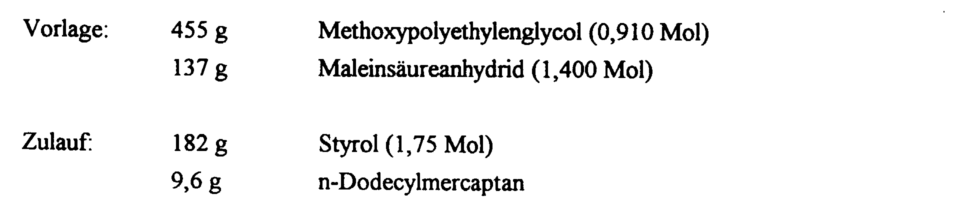

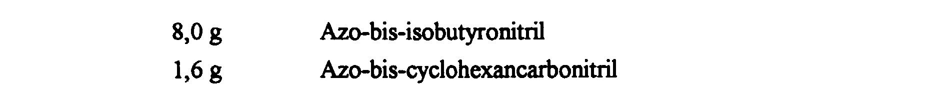

Die Polymerisation erfolgte bei 105°C (Zulaufzeit: 1 Stunde). Im Anschluß an eine 120-minütige Nachreaktion erfolgte die Zugabe von 250 g Methoxypolyethylenglykol-blockpropylenglykolamin mit einer durchschnittlichen EO.-Zahl von 13 und einer durchschnittlichen PO-Zahl von 3 Einheiten pro Mol über einen Zeitraum von 30 Minuten. Nach der Zugabe wurde das Reaktionsgemisch auf 140°C erhitzt und 2 Stunden bei 140°C gerührt. Anschließend wurde das auf 100°C abgekühlte Copolymerisat mit Wasser verdünnt und mit Calciumhydroxid neutralisiert.

### Vergleichsbeispiel V1:

Handelsübliches Naphthalinsulfonsäure-Formaldehyd-Polykondensat ("LIQUIMENT N" der Chemie Linz Ges.m.b.H.)

### Vergleichsbeispiel V2:

Handelsübliches Melaminsulfonsäure-Formaldehyd-Polykondensat ("LIQUIMENT MP-K" der Chemie Linz Ges.m.b.H.)

### Vergleichsbeispiel V3:

Nach dem in der EP-A-402 563 beschriebenen Verfahren (Herstellungsbeispiel 7) wurde ein Copolymerisat aus Methoxypolyethylenglykol-mono-maleinat und N-Vinylpyrrolidon hergestellt.

### Vergleichsbeispiel V4:

Nach dem in der DE-A-41 42 388 beschriebenen Verfahren (Herstellungsbeispiel 1) wurde ein Copolymerisat aus Methoxypolyethylenglykol-mono-maleinat und Styrol hergestellt.

### B) Anwendungsbeispiele

Die Copolymerisate aus den Beispielen 1 bis 14 wurden einer vergleichenden Testung als Fließmittel für Zementmischungen unterzogen, um ihre im Vergleich zu bekannten Fließmitteln erhöhte und länger andauernde Wirksamkeit nachzuweisen.
Nach DIN 1164/7 wurden 450 g Portlandzement der Firma Holderbank AG, Rekingen mit 1350 g Normensand (Grobanteil:Feinanteil = 2:1) und 225 g Wasser, welches das erfindungsgemäße Copolymerisat in gelöster Form enthielt, in einem Mischer normgerecht angerührt. Bei einem konstanten Wasser/Element-Anteil von 0,50 erfolgte die Dosierung der erfindungsgemäßen und der Vergleichsprodukte derart, daß die Konsistenz der Mischungen untereinander vergleichbar war. Unmittelbar nach Herstellung des Mörtels wurde das Ausbreitmaß sowie dessen zeitliche Veränderung über einen Zeitraum von 90 Minuten bestimmt. Darüber hinaus wurde das Abbindeverhalten bei gleicher Konsistenz der Mörtelmischungen ermittelt.
Die Ergebnisse dieser vergleichenden Testung sind in Tabelle 1 zusammengestellt:

**Tabelle 1:**

| Fließ- und Abbindeverhalten von Mörtelmischungen mit erfindungsgemäßen Copolymerisaten und Vergleichsmischungen. | | | | | | | | | | |
|---|---|---|---|---|---|---|---|---|---|---|
| Zusatzmittel gem. | Dosierung % Feststoff bzgl. Zement | Ausbreitmaß in mm nach | | | | | | | Abbinde | |
| | | | | | | | | | beginn | ende |
| Bsp. | | 0 min | 15min | 30min | 45min | 60min | 75min | 90min | h:min | h:min |
| 1 | 0,17 | 202 | 185 | 176 | 171 | 164 | 159 | 152 | 8:00 | 9:30 |
| 2 | 0,20 | 203 | 186 | 178 | 170 | 163 | 158 | 150 | 7:55 | 9:20 |
| 3 | 0,20 | 196 | 190 | 178 | 169 | 162 | 154 | 148 | 7:30 | 9:00 |
| 4 | 0,20 | 208 | 191 | 179 | 172 | 167 | 160 | 154 | 8:00 | 9.25 |
| 5 | 0,20 | 190 | 180 | 175 | 170 | 163 | 157 | 151 | 7:15 | 8:45 |
| 6 | 0,30 | 196 | 191 | 187 | 179 | 175 | 170 | 164 | 7:20 | 8:45 |
| 7 | 0,16 | 202 | 188 | 182 | 172 | 166 | 160 | 150 | 7:50 | 9:20 |
| 8 | 0,17 | 203 | 183 | 174 | 170 | 164 | 160 | 148 | 7:50 | 9:20 |
| 9 | 0,20 | 208 | 195 | 187 | 176 | 170 | 166 | 159 | 8:00 | 9:20 |
| 10 | 0,20 | 195 | 185 | 177 | 169 | 164 | 160 | 156 | 7:25 | 9:00 |
| 11 | 0,175 | 196 | 183 | 178 | 171 | 168 | 162 | 157 | 7:35 | 9:05 |
| 12 | 0,175 | 202 | 192 | 186 | 181 | 171 | 167 | 164 | 8:20 | 9:50 |
| 13 | 0,175 | 202 | 188 | 175 | 171 | 162 | 156 | 148 | 7:00 | 8:30 |
| 14 | 0,20 | 206 | 198 | 191 | 184 | 180 | 174 | 168 | 8:30 | 10:00 |
| V 1 | 0,40 | 191 | 174 | 160 | 150 | | | | 5:20 | 6:40 |
| V 2 | 0,40 | 190 | 168 | 146 | | | | | 5:30 | 7:00 |
| V 3 | 0,40 | 205 | 201 | 197 | 191 | 186 | 184 | 178 | 13:10 | 14:40 |

Um das Lagerungsverhalten der erfindungsgemäßen Produkte in Form ihrer wäßrigen Zubereitungen im Vergleich zu herkömmlichen Zementfließmitteln zu charakterisieren, wurden einige Produkte bei einer konstanten Temperatur von 60°C über einen Zeitraum von 7 Tagen gelagert und nach bestimmten Zeiten hinsichtlich ihrer Wirksamkeit als Zementfließmittel untersucht.

In Tabelle 2 sind die Ausbreitmaße nach DIN 1164/7 nach verschiedenen Lagerzeiten zusammengestellt:

**Tabelle 2:**

| Dispergierverhalten von erfindungsgemäßen und Vergleichscopolymerisaten als Funktion des Lagerzeitraumes der wäßrigen Zubereitungen bei 60°C. | | | | |
|---|---|---|---|---|
| Zusatzmittel gemäß Beispiel | Dosierung % Feststoff bzgl. Zement | Ausbreitmaß in mm nach | | |
| | | 0 Tagen | 2 Tagen | 7 Tagen |
| 1 | 0,20 | 222 | 215 | 220 |
| 2 | 0,25 | 221 | 223 | 218 |
| 6 | 0,40 | 237 | 230 | 229 |
| 9 | 0,25 | 215 | 220 | 223 |
| 11 | 0,25 | 225 | 229 | 221 |
| 12 | 0,20 | 223 | 213 | 226 |
| 13 | 0,25 | 235 | 239 | 233 |
| 14 | 0,20 | 206 | 212 | 206 |
| V 4 | 0,20 | 227 | 220 | 197 |

## Patentansprüche

1. Copolymere, mit einem mittleren Molekulargewicht von 1 000 bis 100 000 g/mol, die im wesentlichen aus den Strukturelementen 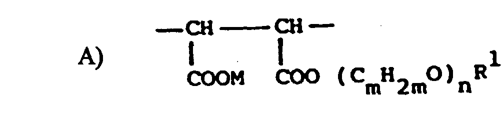 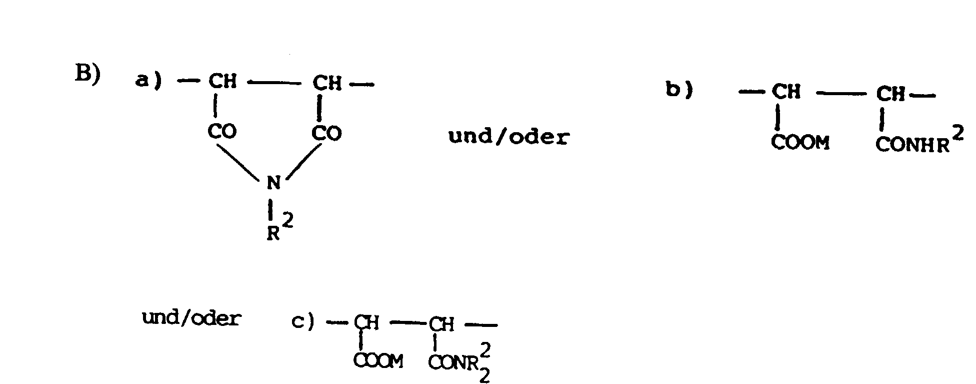 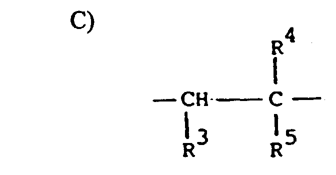 sowie gegebenenfalls 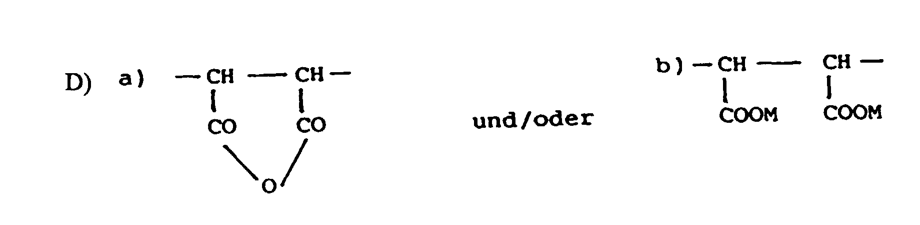 aufgebaut sind, wobei
M: H oder ein Kation wie z. B. Alkali- oder Erdalkalimetall, eine Ammoniumgruppe oder den Rest einer organischen Aminogruppe,
R¹: C₁- bis C₂₀-Alkyl-, C₅- bis C₈-Cycloalkyl- oder Arylrest
R²: H, C₁- bis C₂₀-Alkyl- oder Hydroxyalkyl, C₅- bis C₈-Cycloalkyl- oder Arylrest, in welchem 1 oder mehrere H-Atome durch die Strukturelemente - COOM, -SO₃M und/oder PO₃M₂ substituiert sein können, sowie sich gegebenenfalls wiederholende Struktureinheiten der allgemeinen Formel (CₘH₂ₘO)ₙR¹,
R³: H, Methyl- oder Methylengruppe, die gegebenenfalls substituiert sein kann und unter Einbeziehung von R⁵ einen 5- bis 8-gliedrigen Ring bzw. einen Indenring bildet,
R⁴: H, Methyl- oder Ethylgruppe,
R⁵: H, C₁ - C₂₀-Alkyl-, C₅-C₈-Cycloalkyl- oder Arylrest, der gegebenenfalls substituiert sein kann, Alkoxycarbonylgruppe, Alkoxygruppe, Alkyl- oder Arylcarboxylatgruppe, Carboxylatgruppe, Hydroxyalkoxycarbonylgruppe,
m: eine ganze Zahl von 2 bis 4,
n: eine ganze Zahl von 0 - 100, bevorzugt von 1 - 20 bedeuten.

2. Copolymere gemäß Anspruch 1, dadurch gekennzeichnet, daß sie aus
1 bis 85 Mol% Strukturelement A,
1 bis 85 Mol% Strukturelement B,
1 bis 90 Mol% Strukturelement C,
0 bis 50 Mol% Strukturelement D
aufgebaut sind.

3. Copolymere gemäß Anspruch 2, dadurch gekennzeichnet, daß sie aus
20 bis 55 Mol% Strukturelement A,
2 bis 25 Mol% Strukturelement B,
40 bis 60 Mol% Strukturelement C,
1 bis 10 Mol% Strukturelement D
aufgebaut sind.

4. Verfahren zur Herstellung von Copolymeren gemäß einem der Ansprüche 1 bis 3, dadurch gekennzeichnet, daß
a) ein Maleinsäurehalbester gemäß Formel 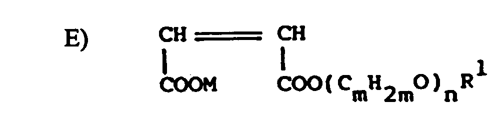 oder ein Gemisch aus einem Polyalkylenglykolmonoether und Maleinsäureanhydrid, welches bei etwa 100 bis 140°C unter Einsatz eines Veresterungskatalysators ebenfalls zum Maleinsäurehalbester gemäß Formel E reagiert, oder ein Gemisch aus Maleinsäurehalbester,Polyalkylenglykolmonoether und Maleinsäureanhydrid vorgelegt wird,
b) die Monomerbestandteile gemäß Formel 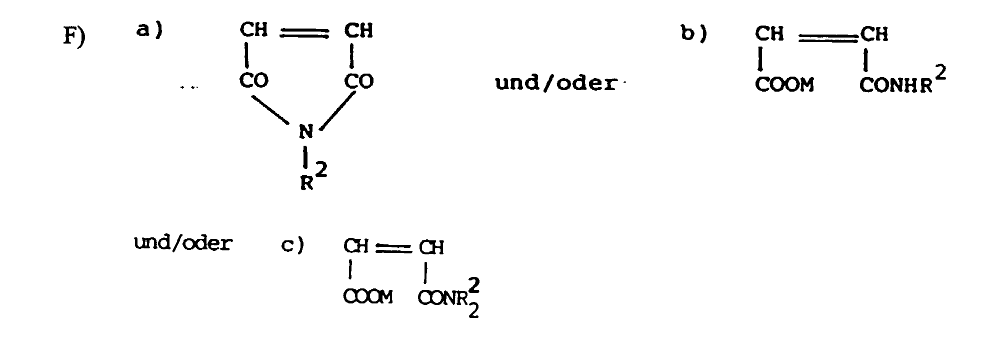 bzw. deren Ausgangssubstanzen, 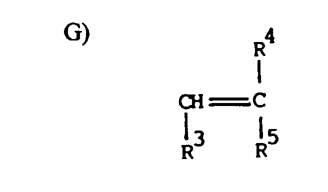 und gegebenenfalls 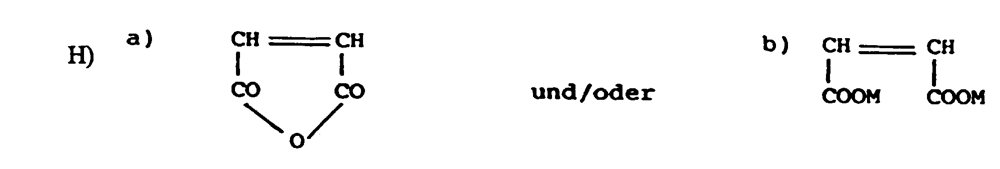 wobei M, R¹, R², R³, R⁴, R⁵, m und n die in Anspruch 1 angeführte Bedeutung besitzen,
sowie gegebenenfalls weiterer Polyalkylenglykolmonoether, sowie gegebenenfalls übliche Polymerisationshilfsmitteln bei etwa 40 bis 120°C unter Rühren zugesetzt werden,
c) das Gemisch bei 40 bis 150°C zur Vervollständigung der Polymerisationsreaktion und polymeranalogen Umsetzung weiter gerührt wird und
d) die Reaktionsmischung nach Abkühlen auf etwa 50 bis 80°C üblicherweise mit einer Base neutralisiert und mit Wasser auf die gewünschte Konzentration verdünnt wird.

5. Verfahren zur Herstellung von Copolymeren gemäß Anspruch 4, dadurch gekennzeichnet, daß
a) ein Polyalkylenglykolmonoether und ein molarer Unterschuß von Maleinsäureanhydrid vorgelegt wird,
b) als Monomerbestandteil F ein Gemisch aus einer Lösung des entsprechenden Amins in Polyalkylenglykolmonoether, dem unter Rühren Maleinsäureanhydrid zugesetzt wird, eingesetzt wird, und daß der Monomerenbestandteil gemäß Formel G gegebenenfalls aus einem separaten Zulaufgefäß dem vorgelegten Gemisch gemäß a) zudosiert wird.

6. Verwendung von Copolymeren gemäß einem der Ansprüche 1 bis 5 als Zusatzmittel zu wäßrigen Suspensionen von anorganischen oder organischen Substanzen.

7. Verwendung von Copolymeren gemäß einem der Ansprüche 1 bis 5, als Zusatzmittel zu hydraulischen Bindemitteln.

8. Verfahren zur Verbesserung der Fließ- und Abbindeeigenschaften und/oder der Mahleigenschaften von hydraulischen Bindemitteln, dadurch gekennzeichnet, daß man den hydraulischen Bindemitteln Copolymere gemäß einem der Ansprüche 1 bis 5 zusetzt.

9. Bindemittelmischung, die hydraulische Bindemittel und Copolymere gemäß einem der Ansprüche 1 bis 5, sowie gegebenenfalls Wasser, übliche Zuschlagstoffe und Additive enthält.

10. Baustoff auf Basis eines hydraulischen Bindemittels, das ein Copolymer gemäß einem der Ansprüche 1 bis 5 enthält.

## Claims

1. Copolymers which have an average molecular weight of 1000 to 100,000 g/mol and are essentially built up from the structural elements 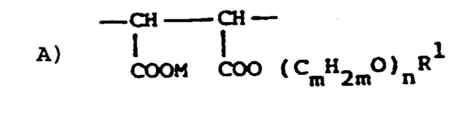 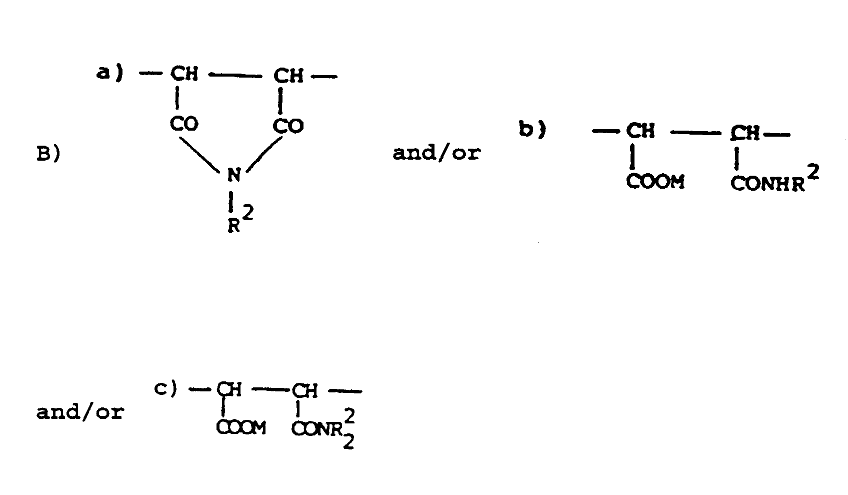 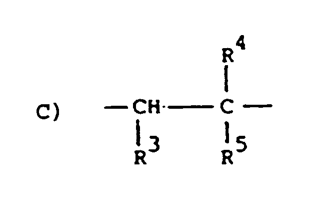 and, if appropriate, 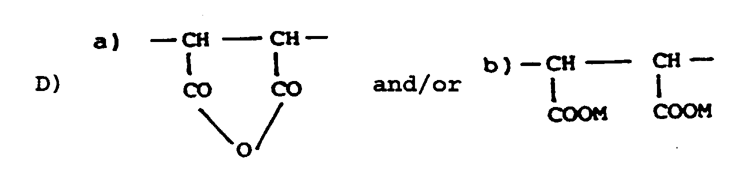 wherein
M: is H or a cation, such as, for example, an alkali metal or alkaline earth metal, an ammonium group or the radical of an organic amino group,
R¹: is a C₁- to C₂₀-alkyl, C₅- to C₈-cycloalkyl or aryl radical
R²: is H, a C₁- to C₂₀-alkyl or hydroxyalkyl, C₅- to C₈-cycloalkyl or aryl radical, in which 1 or more H atoms can be substituted by the structural elements -COOM, -SO₃M and/or PO₃M₂, and optionally recurring structural units of the general formula (CₘH₂ₘO)ₙ R¹,
R³: is H, a methyl or methylene group, which optionally can be substituted and, including R⁵ forms a 5- to 8-membered ring or an indene ring,
R⁴: is H, a methyl or ethyl group,
R⁵: is H, a C₁-C₂₀-alkyl, C₅-C₈-cycloalkyl or aryl radical, which optionally can be substituted, an alkoxycarbonyl group, alkoxy group, alkyl- or arylcarboxylate group, carboxylate group, hydroxyalkoxycarbonyl group,
m: is an integer from 2 to 4,
n: is an integer from 0 - 100, preferably from 1 - 20.

2. Copolymers according to Claim 1, characterized in that they are built up from
1 to 85 mol % of structural element A,
1 to 85 mol % of structural element B,
1 to 90 mol % of structural element C,
0 to 50 mol % of structural element D.

3. Copolymers according to Claim 2, characterized in that they are built up from
20 to 55 mol % of structural element A,
2 to 25 mol % of structural element B,
40 to 60 mol % of structural element C,
1 to 10 mol % of structural element D.

4. Process for the preparation of copolymers according to one of Claims 1 to 3, characterized in that
a) a maleic acid half-ester according to the formula 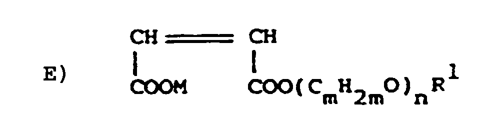 or a mixture of a polyalkylene glycol monoether and maleic anhydride which also reacts at about 100 to 140°C, employing an esterification catalyst, to give the maleic acid half-ester according to formula E, or a mixture of a maleic acid half-ester, a polyalkylene glycol monoether and maleic anhydride is initially introduced into the reaction vessel,
b) the monomer constituents according to the formula 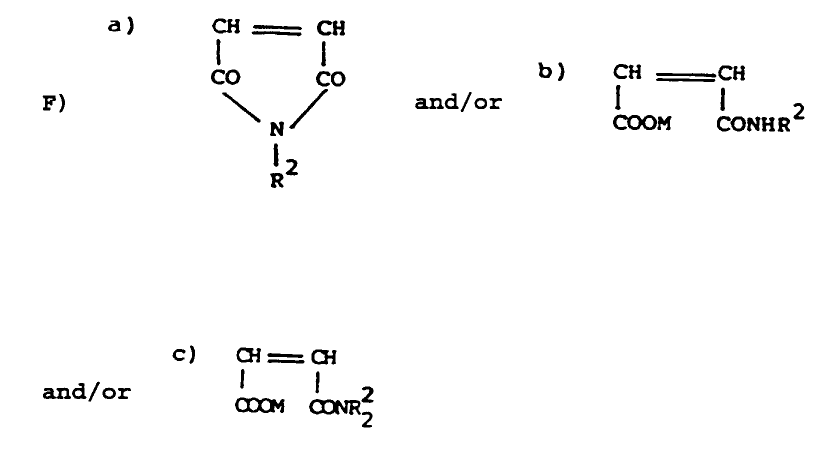 or starting substances thereof, 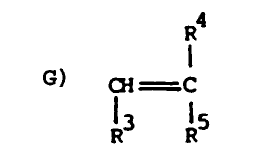 and, if appropriate, 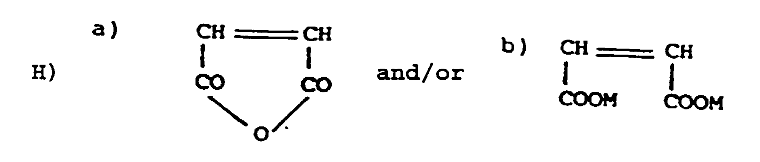 wherein M, R¹, R², R³, R⁴, R⁵, m and n have the meaning given in Claim 1,
and, if appropriate, further polyalkylene glycol monoether, and, if appropriate, customary polymerization auxiliaries are added at about 40 to 120°C, while stirring,
c) the mixture is further stirred at 40 to 150°C to bring the polymerization reaction and polymer-analogous reaction to completion and
d) after cooling to about 50 to 80°C, the reaction mixture is usually neutralized with a base and diluted to the desired concentration with water.

5. Process for the preparation of copolymers according to Claim 4, characterized in that
a) a polyalkylene glycol monoether and less than the molar amount of maleic anhydride is initially introduced into the reaction vessel,
b) a mixture of a solution of corresponding amine in the polyalkylene glycol monoether, to which maleic anhydride is added, while stirring, is employed as monomer constituent F, and in that the monomer constituent according to formula G is metered into the initially introduced mixture according to a), if appropriate from a separate feed vessel.

6. Use of copolymers according to one of Claims 1 to 5, as additives to aqueous suspensions of inorganic or organic substances.

7. Use of copolymers according to one of Claims 1 to 5 as additives to hydraulic binders.

8. Process for improving the flow and setting properties and/or the grinding properties of hydraulic binders, characterized in that copolymers according to one of Claims 1 to 5 are added to the hydraulic binders.

9. Binder mixture which comprises hydraulic binders and copolymers according to one of Claims 1 to 5, and if appropriate water, customary admixtures and additives.

10. Building material based on a hydraulic binder which comprises a copolymer according to one of Claims 1 to 5.

## Revendications

1. Copolymères ayant un poids moléculaire moyen de 1 000 à 100 000 g/mole, constitués essentiellement par les éléments structurels 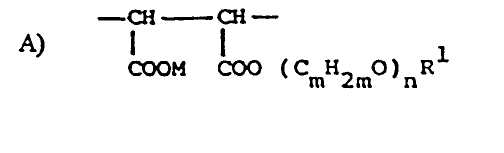 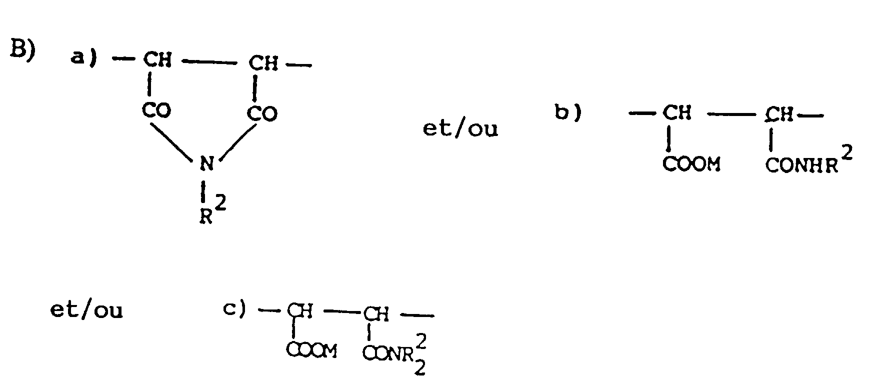 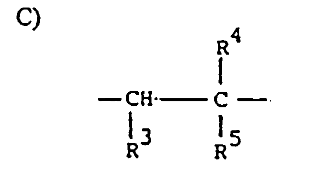 ainsi qu'éventuellement 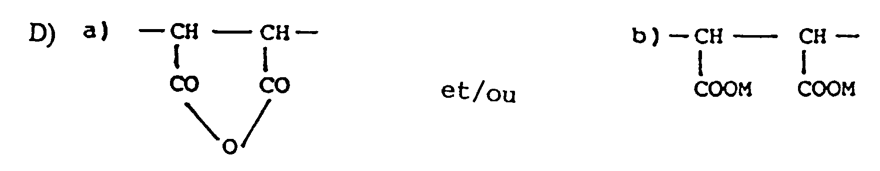 où
M : signifie H ou un cation, comme, par exemple d'un métal alcalin ou alcalino-terreux, un groupe ammonium ou le reste d'un groupe amino organique,
R¹ : signifie un reste alkyle en C₁ à C₂₀, un reste cycloalkyle en C₅ à C₈ ou un reste aryle,
R² : signifie H, un reste alkyle ou hydroxyalkyle en C₁ à C₂₀, un reste cycloalkyle ou aryle en C₅ a C₈, dans lequel 1 ou plusieurs atomes d'hydrogène peuvent être substitués par les éléments structurels -COOM, -SO₃M et/ou PO₃M₂, ainsi qu'éventuellement des unités structurelles répétitives répondant à la formule générale (CₘH₂ₘO)ₙR¹,
R³ : signifie H, le groupe méthyle ou méthylène, qui peut éventuellement être substitué et forme avec R⁵ un noyau ayant de 5 à 8 chaînons ou un noyau d'indène,
R⁴ : signifie H, le groupe méthyle ou le groupe éthyle,
R⁵ : signifie H, un reste alkyle en C₁-C₂₀, un reste cycloalkyle en C₅-C₈ ou un reste aryle, qui peut éventuellement être substitué, un groupe alcoxycarbonyle, un groupe alcoxy, un groupe alkyle ou un groupe carboxylate d'aryle, un groupe carboxylate ou un groupe hydroxyalcoxycarbonyle,
m : signifie un nombre entier de 2 à 4,
n : signifie un nombre entier de 0 à 100, de préférence de 1 à 20.

2. Copolymères selon la revendication 1, caractérisés en ce qu'ils sont formés de :
1 à 85 % en moles d'élément structurel A,
1 à 85 % en moles d'élément structurel B,
1 à 90 % en moles d'élément structurel C,
0 à 50 % en moles d'élément structurel D.

3. Copolymères selon la revendication 2, caractérisés en ce qu'ils sont formés de :
20 à 55 % en moles d'élément structurel A,
2 à 25 % en moles d'élément structurel B,
40 à 60 % en moles d'élément structurel C,
1 à 10 % en moles d'élément structurel D.

4. Procédé de préparation des copolymères selon l'une des revendications 1 à 3, caractérisé en ce que :
a) on introduit préalablement un semi-ester de l'acide maléique répondant à la formule 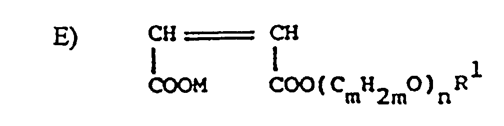 ou un mélange d'un monoéther de polyalkylèneglycol et d'anhydride maléique qui réagit à une température comprise entre environ 100 et 140°C, avec mise en oeuvre d'un catalyseur d'estérification, également pour donner le semi-ester d'acide maléique selon la formule E, ou un mélange d'un semi-ester d'acide maléique, d'un monoéther de polyalkylèneglycol et d'anhydride maléique,
b) on ajoute les composants monomères répondant à la formule 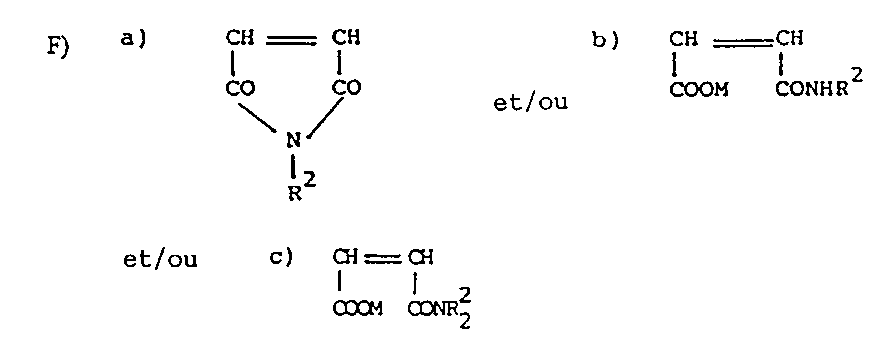 ou leurs substances de départ 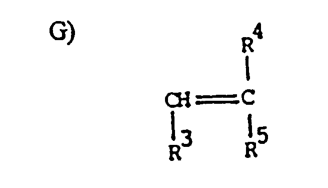 et éventuellement 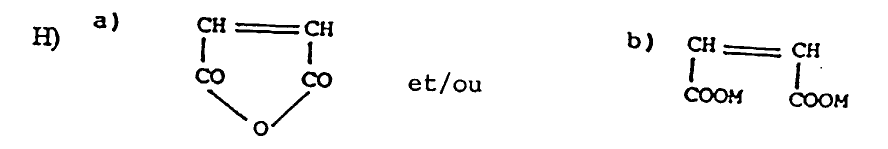 où M, R¹, R², R³, R⁴, R⁵, m et n ont les significations indiquées dans la revendication 1,
ainsi qu'éventuellement d'autres monoéthers de polyalkylèneglycol, ainsi qu'éventuellement des adjuvants usuels de polymérisation, à une température d'environ 40 à 120°C, sous agitation,
c) on continue d'agiter ce mélange à une température de 40 à 150°C pour compléter la réaction de polymérisation et la réaction de polymères analogues, et
d) après avoir refroidi le mélange de réaction à une température d'environ 50 à 80°C, on le neutralise de manière usuelle avec une base et on le dilue avec de l'eau jusqu'à l'obtention de la concentration souhaitée.

5. Procédé de préparation de copolymères selon la revendication 4, caractérisé en ce que :
a) on introduit préalablement un monoéther de polyalkylèneglycol et un déficit molaire d'anhydride maléique,
b) on utilise, comme composant monomère F, un mélange d'une solution de l'amine correspondante dans le monoéther de polyalkylèneglycol, auquel on ajoute de l'anhydride maléique, sous agitation, et on ajoute le composant monomère selon la formule G, de manière dosée, au mélange préalablement introduit selon a), éventuellement à partir d'un récipient d'amenée séparé.

6. Utilisation des copolymères selon l'une des revendications 1 à 5, comme additifs à des suspensions aqueuses de substances minérales ou organiques.

7. Utilisation des copolymères selon l'une des revendications 1 à 5, comme additifs à des liants hydrauliques.

8. Procédé d'amélioration des propriétés d'écoulement et de prise et/ou des propriétés de broyage de liants hydrauliques, caractérisé en ce qu'on ajoute des copolymères selon l'une des revendications 1 à 5 aux liants hydrauliques.

9. Mélange de liants contenant des liants hydrauliques et des copolymères selon l'une des revendications 1 à 5, ainsi qu'éventuellement de l'eau, des agrégats et des additifs usuels.

10. Matériau de construction à base d'un liant hydraulique, contenant un copolymère selon l'une des revendications 1 à 5.
